## Europäisches Patentamt
## European Patent Office
## Office européen des brevets

(19)

(11) Numéro de publication: **0 265 335**
**B1**

(12) **FASCICULE DE BREVET EUROPEEN**

(45) Date de publication du fascicule du brevet:
07.02.90

(21) Numéro de dépôt: 87402333.6

(22) Date de dépôt: 19.10.87

(51) Int. Cl.⁴: **B64C 11/18, B64C 11/14**

(54) Perfectionnements apportés aux hélices aériennes notamment pour propulseurs d'aéronef.

(30) Priorité: 24.10.86 FR 8614826

(43) Date de publication de la demande:
27.04.88 Bulletin 88/17

(45) Mention de la délivrance du brevet:
07.02.90 Bulletin 90/6

(84) Etats contractants désignés:
DE GB IT

(56) Documents cités:
FR-A- 2 365 482
GB-A- 2 170 868

(73) Titulaire: **Office National d'Etudes et de Recherches Aérospatiales (O.N.E.R.A.), 29 Avenue de la Division Leclerc, F-92320 Châtillon-sous-Bagneux(FR)**

(72) Inventeur: **Bousquet, Jean-Marc, 246 Rue de la Convention, F-75015 Paris(FR)**
Inventeur: **Faubert, Alain, 18 Rue Racine, F-78960 Voisins le Bretonneux(FR)**
Inventeur: **Vingut, Georges, 15 Rue Lodi, F-13006 Marseille(FR)**

(74) Mandataire: **Jacquelin, Marc-Henri et al, Cabinet PLASSERAUD 84, rue d'Amsterdam, F-75009 Paris(FR)**

## Description

La présente invention concerne les hélices aériennes, notamment pour propulseurs d'aéronef.

On sait que le rendement théorique d'une hélice, pour une charge au disque $C = P/D^2$ donnée (P étant la puissance sur l'arbre d'hélice et D le diamètre), augmente avec la vitesse de rotation de l'hélice. Mais l'adoption d'une vitesse de rotation élevée se heurte à un problème : la composition de la vitesse due à la rotation de l'hélice et de la vitesse d'avancement de l'aéronef conduit à des nombres de Mach relatifs qui augmentent progressivement depuis l'embase de la pale jusqu'à son extrémité. Sur les hélices classiques, le nombre de Mach atteint fréquemment des valeurs de l'ordre de 0,9 même lorsque les vitesses d'avancement sont modérées par exemple de l'ordre de M = 0,6. A ces nombres de Mach relatifs élevés apparaissent déjà, sur les profils minces classiques des ondes de choc intenses provoquant le décollement de la couche limite et conduisant à des niveaux de perte élevés. En conséquence, le rendement propulsif des hélices classiques décroît rapidement, à vitesse d'hélice donnée, lorsque la vitesse de l'aéronef augmente, ce qui a conduit à remplacer les propulseurs à hélice par d'autres types de propulseurs, notamment par des turboréacteurs, lorsque la vitesse des aréonefs dépasse M = 0,65 environ.

De nombreux travaux ont déjà été effectués pour tenter d'accroître, vers des nombres de Mach plus élevés, le domaine d'utilisation des hélices.

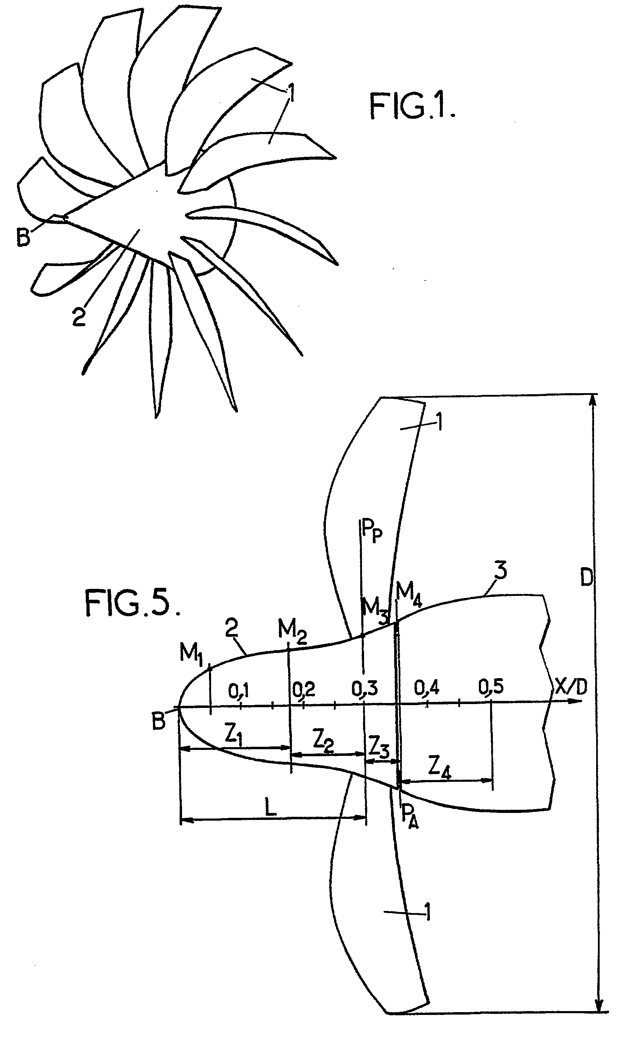

C'est ainsi que l'on a proposé des hélices telles que celle montrée (par une vue en perpective) sur la figure 1 des dessins ci-annexés ; cette hélice comporte un grande nombre de pales 1 (nombre de pales généralement supérieur à huit), sortant d'un capot 2 se raccordant au fuseau moteur (non représenté).

Les pales 1 de cette hélice présentent une forme particulière en ce sens que leur extrémité est recourbée vers l'arrière, par rapport au sens de rotation de l'hélice, et vers l'aval, par rapport au plan de rotation de l'hélice.

Dans la construction d'hélice de ce type, on rencontre des difficultés de conception (tant au point de vue réalisation qu'au point de vue résistance) en raison de la forme gauche de la ligne selon laquelle les profils constitutifs de chaque pale se répartissent.

Il est classique de considérer, pour caractériser la forme d'une pale, le lieu géométrique des points M situés au quart de corde (compté à partir du bord d'attaque) de chaque profil, la courbe ainsi engendrée étant appelée ci-après ligne moyenne F de la pale.

Pour définir cette ligne moyenne, on fait appel au trièdre de référence suivant:
— axe OX constitué par l'axe de rotation de l'hélice;
— axe OZ constitué par l'axe de pivotement de la pale;
— axe OY complétant le trièdre trirectangle.

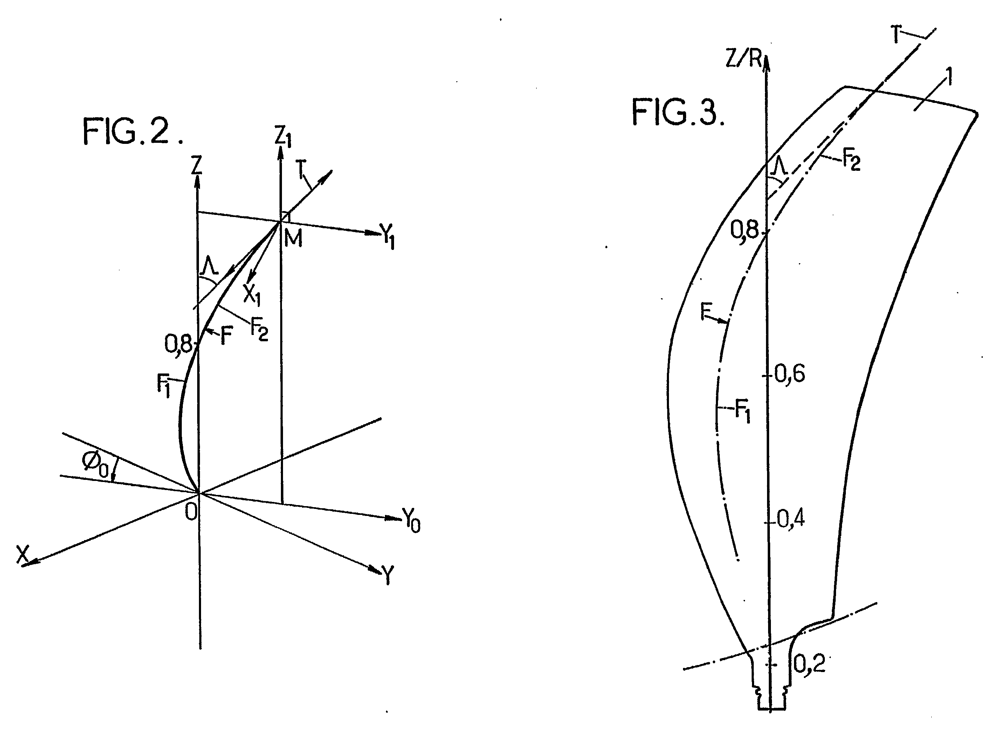

Etant donné que l'extrémité de chaque pale est recourbée vers l'aval par rapport au plan de rotation de l'hélice (plan OZ–OY) on considère, pour définir la ligne moyenne, un plan défini par l'axe OZ et un axe $OY_0$ formant avec l'axe OY un angle $\emptyset_0$ (figure 2).

A chaque point M peut donc être associé un trièdre de référence $MX_1$, $MY_1$, $MZ_1$ déduit du trièdre $OX_0\,OY_0\,OZ$ par translation (figure 2).

Chaque profil est donc défini dans le plan $MX_1$, $MY_1$.

Selon l'invention la ligne moyenne F de chaque pale étant le lieu géométrique des points de chaque profil situés au quart de corde compté à partir du bord d'attaque, est caractérisée par le fait qu'elle est constituée par une courbe continue plane contenue dans un plan défini par les axes $OZ–OY_0$ ayant leur origine O sur l'axe de rotation de l'hélice, ledit plan $OZ–OY_0$ faisant avec le plan de rotation de l'hélice un angle $\emptyset_0$ dont le signe est tel que l'extrémité de chaque pale est recourbée vers l'aval par rapport au plan de rotation $OZ–OY$ de l'hélice, et dont la valeur absolue est comprise entre 35° et 55° et de préférence entre 40° et 50°, ladite courbe présentant une première partie de coordonnées $Y_0$ négative et Z positive, et une seconde partie de coordonnées $Y_0$ positive et Z positive, le point de coordonnée $Y_0 = O$ et $Z \neq O$ étant situé entre les valeurs de Z comprises entre 0,75 et 0,85 R (R désignant le rayon de l'hélice), la tangente à cette courbe a son extrémité correspondant à l'extrémité de la pale faisant avec l'axe OZ un angle $\Lambda$ compris entre 30° et 50° et de préférence entre 35° et 45°.

Selon l'invention, cette courbe peut-être définie par l'équation suivante, dans le plan $OZ–OY_0$:

$$Y_0/R = M_0 + M_1\,(Z/R) + M_2\,(Z/R)^2 + M_3\,(Z/R)^3 + M_4\,(Z/R)^4$$ dans laquelle

$0,05 < M_0 \leq 0,015$; $0,1 < M_1 \leq 0,2$; $-2 < M_2 \leq -1$; $1,5 < M_3 \leq 3$; $-1 < M_4 \leq -0,5$ selon la valeur de l'angle $\Lambda$ d'extrémité de pale que l'on veut obtenir.

Selon une disposition complémentaire de l'invention, les pales, réalisées en suivant la ligne moyenne F définie ci-dessus, émergent d'un capot de forme telle qu'il provoque un ralentissement local de l'écoulement au niveau de l'embase des pales.

Ce capot est défini comme un corps de révolution engendré par la rotation d'une ligne méridienne autour de l'axe de rotation de l'hélice, cette ligne méridienne étant repérée par ses coordonnées X et Y portées sur l'axe de rotation de l'hélice et sur un axe radial et rapportées au diamètre de l'hélice, soit:

$$X = \frac{x}{D}$$

$$Y = \frac{r}{D}$$

x désignant l'abscisse, r le rayon et D le diamètre de l'hélice.

Cette ligne méridienne est caractérisée par sa coubure C définie par :

$$\frac{1}{C} = \frac{[1 + (dY/dX)^2]^{3/2}}{d^2Y/dX^2}$$

La position des pales par rapport au capot est repérée par la distance L séparant le bord d'attaque du capot et le plan des pales défini comme étant le plan perpendiculaire à l'axe de rotation de l'hélice et passant par son centre.

Conformément à cette disposition complémentaire les pales sortent d'un capot à une distance L du bord d'attaque dudit capot, le susdit capot étant défini par une ligne méridienne présentant :

- à son origine, constituant le bord d'attaque du capot, une courbure maximum supérieure à 15,
- entre son origine et une premier point d'abscisse relative X = x/D égal à 0,05, une courbure décroissant rapidement de la valeur maximum à environ une valeur de 7,
- entre ce premier point et un deuxième point situé à une distance du bord d'attaque comprise entre 0,5 et 0,7 fois la distance L bord d'attaque-plan des pales, une courbure décroissant sensiblement linéairement de la valeur de 7 à une valeur de 0,
- entre ce deuxième point et un troisième point situé dans le plan des pales, une courbure décroissant plus lentement que la susdite décroissance linéaire, de la valeur de 0 à une valeur minimum comprise entre -3 et -5,
- entre ce troisième point et un quatrième point situé dans le plan arrière du capot, une courbure croissant rapidement de la valeur minimum à une valeur de 0.

Avantageusement le fuseau moteur qui se raccorde au capot présente une ligne méridienne prolongeant celle du capot et dont la courbure croît de la valeur 0 à environ une valeur de 3 à une distance relative de 0,10 à 0,15 en aval du plan arrière du capot, puis décroît de la valeur de 3 à environ une valeur de 1 à une distance relative de 0,40 à 0,45 en aval du plan arrière du capot.

L'invention consiste, mise à part les dispositions dont il vient d'être question, en certaines autres dispositions qui s'utilisent de préférence en même temps et qui seront décrites plus en détail ci-après.

L'invention pourra, de toute facon, être bien comprise à l'aide du complément de description et des dessins ci-annexés, lesquels compléments et dessins sont relatifs à des modes de réalisation préférés de l'invention et ne comportent aucun caractère limitatif.

La figure 1 est une vue en perspective d'une hélice à laquelle on se propose d'appliquer les perfectionnements selon l'invention.

La figure 2 est une vue en perspective du trièdre de référence permettant de dé          on.

La figure 3 est une vue dans un plan rabattu, d'une pale d'hélice conforme à l'invention (pale dévrillée).

La figure 4 est une vue montrant, par différentes coupes cylindriques, à différents rayons, les différents profils de la pale d'hélice conforme à l'invention.

La figure 5 est une coupe schématique d'une hélice conforme à l'invention et dont le capot est établi suivant une disposition complémentaire de l'invention.

La figure 6 est une courbe montrant l'évolution de la courbure de capot de l'hélice représentée sur la figure 5.

La figure 7 est une courbe d'épaisseur relative d'un exemple de réalisation d'une pale d'hélice conforme à l'invention.

La figure 8 est une courbe de cordes relatives de la pale de la figure 7.

La figure 9 est une courbe représentant la loi de vrillage de la pale de la figure 7.

Selon l'invention, la pale de l'hélice est caractérisée par le fait que le lieu géométrique des points M situés au quart de corde (compté à partir du bord d'attaque) de chaque profil est situé sur une courbe continue plane contenue dans un plan défini par les axes $OZ\text{--}OY_o$ ayant leur origine O sur l'axe de rotation de l'hélice, ledit plan $OZ\text{--}OY_o$ faisant avec le plan de rotation de l'hélice un angle $\varnothing_o$ dont le signe est tel que l'extrémité de chaque pale est recourbée vers l'aval par rapport au plan de rotation $OZ\text{--}OY$ de l'hélice, et dont la valeur absolue est comprise entre 35° et 55° et de préférence entre 40° et 50°, ladite courbe présentant une première partie de coordonnées $Y_0$ négative et Z positive, et une seconde partie de coordonnées $Y_0$ positive et Z positive, le point de coordonnée $Y_0 = O$ et $Z \neq O$ étant situé entre les valeurs de Z comprises entre 0,75 et 0,85 R (R désignant le rayon de l'hélice), la tangente à cette courbe à son extrémité correspondant à l'extrémité de la pale faisant avec l'axe OZ un angle $\Lambda$ compris entre 30° et 50° et de préférence entre 35° et 45°.

Selon l'invention, cette courbe est définie par l'équation suivante, dans le plan OZ–OY$_0$:

$Y_0/R = M_0 + M_1 (Z/R) + M_2 (Z/R)^2 + M_3 (Z/R)^3 + M_4 (Z/R)^4$ dans laquelle

$0,05 < M_0 \leq 0,015; 0,1 < M_1 \leq 0,2; -2 < M_2 \leq -1; 1,5 < M_3 \leq 3; -1 < M_4 \leq -0,5$ selon la valeur de l'angle $\Lambda$ d'extrémité de pale que l'on veut obtenir.

La figure 3 représente une vue d'une pale établie conformément à l'invention, la pale étant représentée dévrillée.

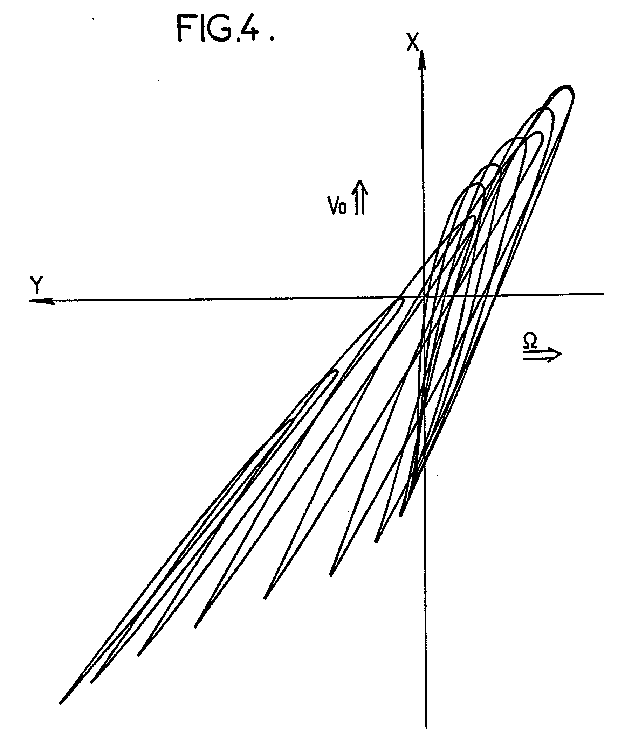

Sur la figure 4 on a représenté, par des coupes cylindriques effectuées selon les rayons, les profils de la pale.

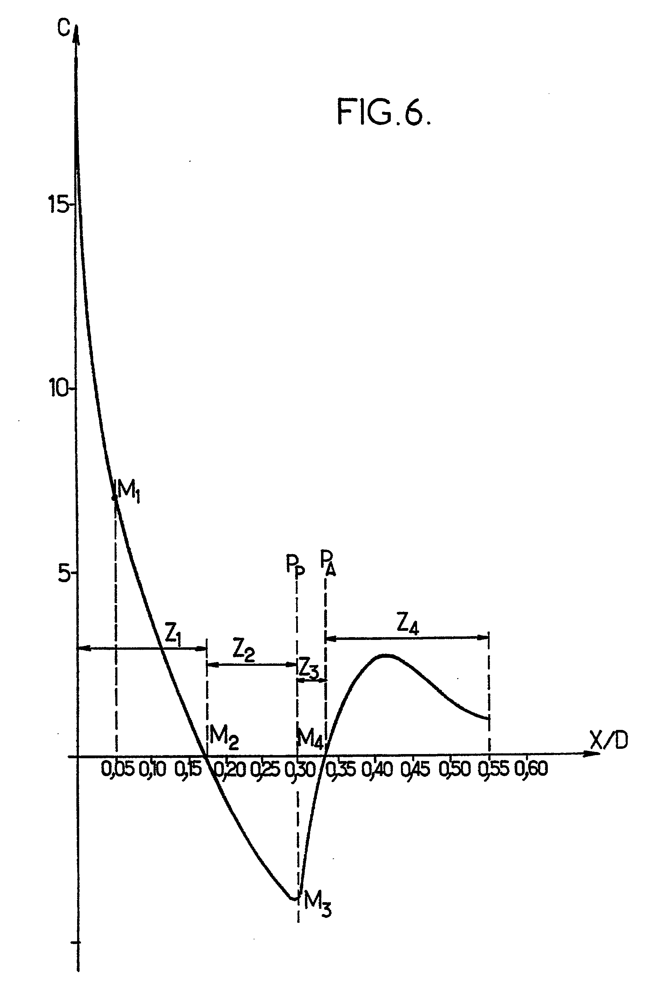

En se référant au système de coordonnées défini précédemment et aux figures 5 et 6, le capot 2 est défini par une ligne méridienne présentant:

- à son origine 0, constituant le bord d'attaque B du capot, une courbure maximum supérieure à 15,
- entre son origine 0 et un premier point $M_1$ d'abscisse relative $X = x/D$ égale à 0,05, une courbure décroissant rapidement de la valeur maximum à environ une valeur de 7,
- entre ce premier point $M_1$ et un deuxième point $M_2$ situé à une distance $L_2$ du bord d'attaque comprise entre 0,5 et 0,7 fois la distance L bord d'attaque-plan des pales, une courbure décroissant sensiblement linéairement de la valeur de 7 à une valeur de 0,
- entre ce deuxième point $M_2$ et un troisième point $M_3$ situé dans le plan des pales P p, une courbure décroissant plus lentement que la susdite décroissance linéaire, de la valeur de 0 à une valeur minimum comprise entre -3 et -5,
- entre ce troisième point $M_3$ et un quatrième point $M_4$ situé dans le plan arrière P A du capot, une courbure croissant rapidement de la valeur minimum à une valeur de 0.

Le capot présente donc :
- une première zone $Z_1$, entre le bord d'attaque B et le deuxième point $M_2$, dans laquelle la courbure décroît d'abord assez rapidement de sa valeur maximale à une valeur de 7 environ, puis ensuite décroît moins rapidement, d'une valeur d'environ 7 à sa valeur nulle,
- une deuxième zone $Z_2$ entre n des pales P p, dans laquelle la courbure est négative et décroit encore plus lentement jusqu'à sa valeur minimale, et
- une troisième zone $Z_3$, entre le plan des pales et le plan arrière P A du capot, dans laquelle la courbure croît rapidement de sa valeur minimale à une valeur nulle.

Le fuseau moteur 3 qui se raccorde au capot 2 présente une ligne méridienne prolongeant celle du capot et dont la courbure croît de la valeur 0 à environ une valeur de 3 à une distance relative de 0,10, à 0,15 en aval du plan arrière du capot, puis décroît de la valeur de 3 à environ une valeur de 1 à une distance relative de 0,40, à 0,45 en aval du plan arrière du capot.

Le fuseau moteur présente donc une zone, dite quatrième zone $Z_4$, prolongeant la dernière zone $Z_3$ du capot dont la courbure varie assez rapidement en suivant d'abord une croissance puis une décroissance.

Cette variante de la courbure de la ligne méridienne constituant le capot de l'hélice et le début du fuseau moteur est clairement montrée sur la figure 3 sur laquelle on a porté, en abscisses, les distances relatives (X/D) comptées sur l'axe de rotation e l'hélice, et en ordonnées, la courbure C.

A titre d'exemple, la ligne méridienne constituant le capot de l'hélice et le début du fuseau moteur, peut être constituée par les tronçons de courbes suivants, dans le sytème cartésien X,Y dans lequel $X = x/D$ et $Y = r/D$
- pour $0 < X \leq 0,3$
$Y = 0,3271995 \, X^{1/2} - 2,422616 \, X^2 + 5,697069 \, X^3$
- pour $0,3 \leq X \leq 0,55$
$Y = 2,996639 - 38,21174 \, X + 200,4801 \, X^2 - 538,7765 \, X^3 + 794,8556 \, X^4 - 615,5586 \, X^5 + 196,3246 \, X^6$

Un autre exemple donne, pour le capot et le fuseau moteur, la ligne méridienne définie dans le tableau ci-dessous qui reprend point par point les cotes de cette ligne dans le même système cartésien X, Y, la notation $E \pm W$ signifiant $10^{\pm W}$.

| X | Y |
|---|---|
| 0. | 0. |
| .1250000E−01 | .3621461E−01 |
| .2500000E−01 | .5030967E−01 |
| .3750000E−01 | .6025554E−01 |
| .5000000E−01 | .6781963E−01 |
| .6250000E−01 | .7372742E−01 |
| .7500000E−01 | .7838351E−01 |
| .8750000E−01 | .8205535E−01 |
| .1000000E+00 | .8494048E−01 |
| .1125000E+00 | .8719646E−01 |
| .1250000E+00 | .8895621E−01 |
| .1375000E+00 | .9033639E−01 |
| .1500000E+00 | .9144257E−01 |
| .1625000E+00 | .9237234E−01 |
| .1750000E+00 | .9321749E−01 |
| .1875000E+00 | .9406537E−01 |
| .2000000E+00 | .9499998E−01 |
| .2125000E+00 | .9610265E−01 |
| .2250000E+00 | .9745259E−01 |
| .2375000E+00 | .9912732E−01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

5

Finalement et quel que soit le mode de réalisation adopté, on dispose d'une hélice dont la construction est simplifiée, tant au point de vue de la réalisation qu'au point de vue de la résistance : en effet, la forme particulière donnée à la ligne moyenne des pales permet, d'une part, une réalisation plus facile de la pale, et d'autre part, une meilleure répartition des masses favorables à une résistance mécanique accrue.

De plus, grâce à la forme du capot, les phénomènes de blocage de l'écoulement dans les canaux délimités par les pales au niveau de leurs embases sont évités. Le rendement de l'hélice ne se trouve donc pas diminué par les chocs ou les décollements de couche limite que de tels phénomènes de blocage risquaient de provoquer : l'hélice peut donc être utilisée à des nombres de Mach élevés (supérieurs à 0,65) avec des performances comparables à celles des hélices définies pour des nombres de Mach usuels de la propulsion par hélice où celles-ci ont des rendements voisins ou supérieurs à 0,8.

A titre d'exemple, on donne ci-après les résultats comparatifs d'essais d'une hélice conforme à l'invention.

L'hélice comporte douze pales et une capot conforme à la disposition complémentaire de l'invention.

Chaque pale de l'hélice selon la figure 3, représentée avant vrillage, comporte les profils suivants répartis sur l'envergure Z de la pale :

- à 0,2 R, en pied de pale, un profil circulaire portant la pale et permettant sa rotation angulaire,
- à 0,3 R, un profil d'épaisseur relative e/c = 13 %
- à 0,5 R, un profil d'épaisseur relative e/c = 9%
- à 0,7 R, un profil d'épaisseur relative e/c = 6%
- à 0,9 R, un profil d'épaisseur relative e/c = 3,5%.

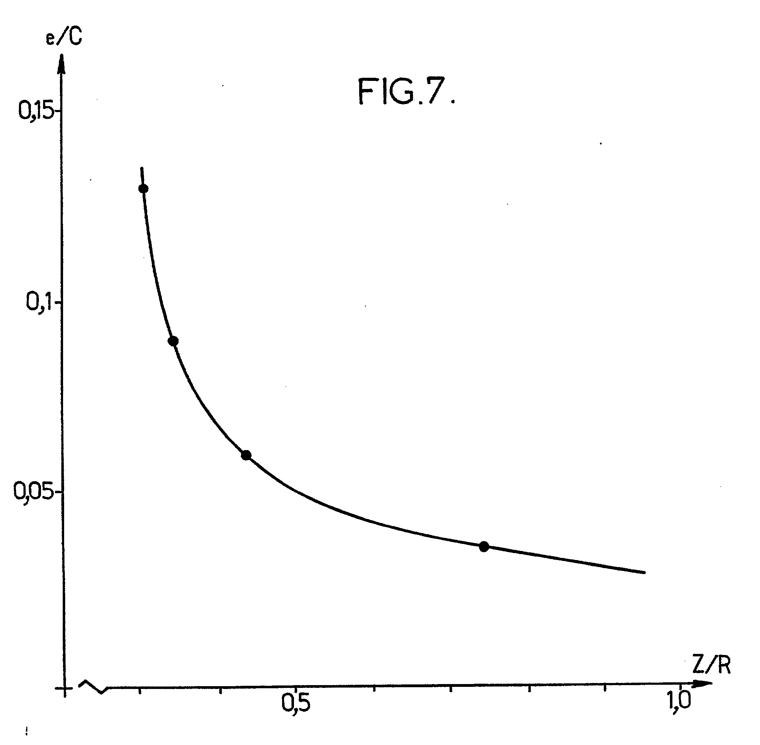

Les profils indiqués ci-dessus constituent des points particuliers de la loi d'épaisseur relative montrée sur la figure 7.         s de manière connue pour l'application aux hélices transsoniques.

Vers l'embase de pale, le profil d'épaisseur relative e/c = 13 % est raccordé progressivement jusqu'à l'intersection avec le capot où il épouse la forme de celui-ci.

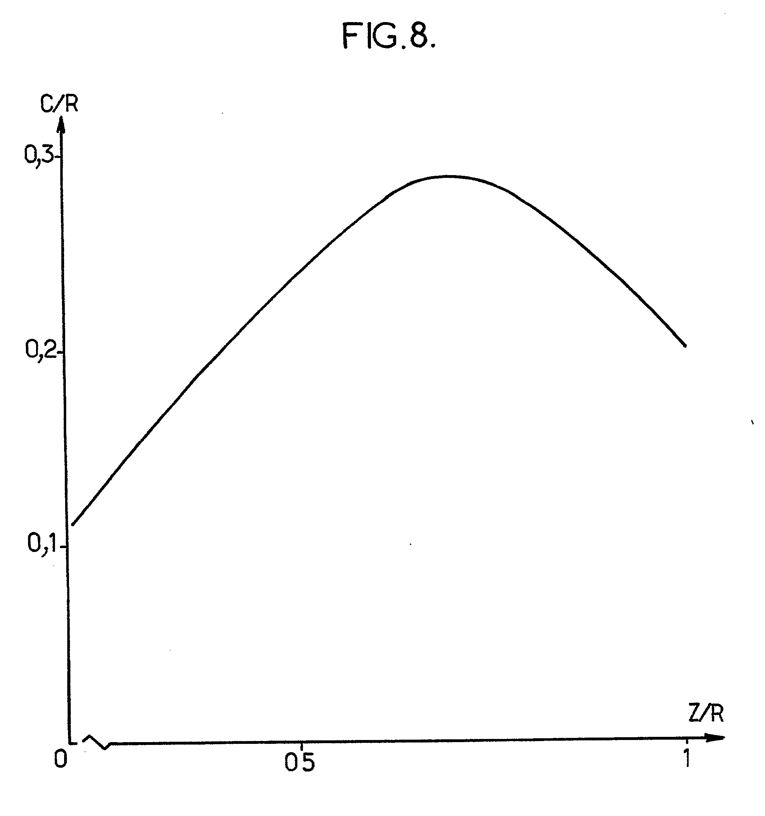

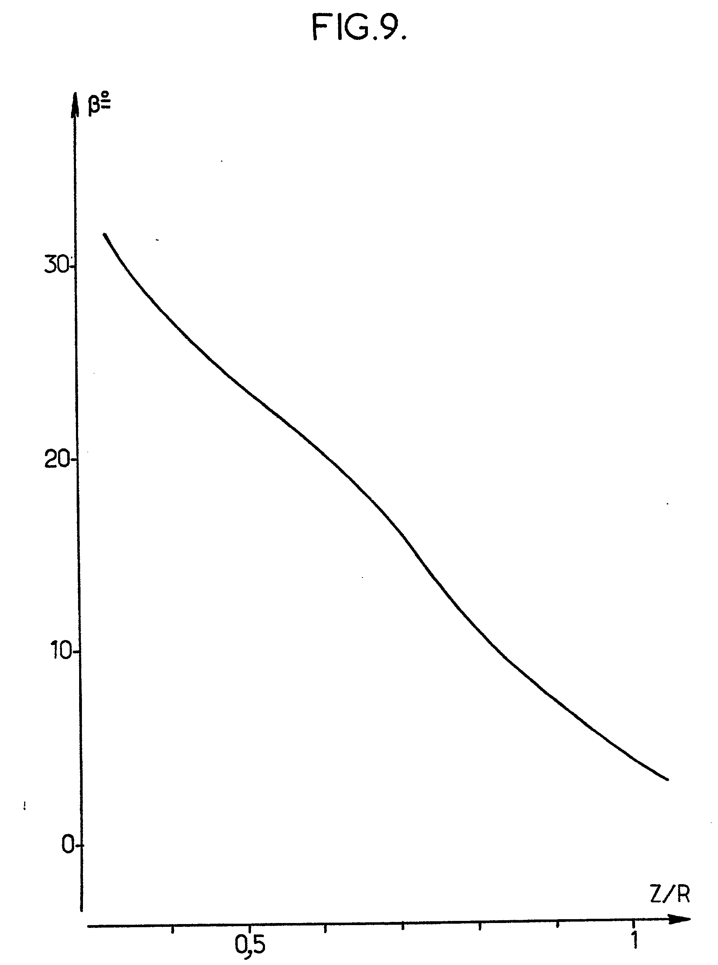

La pale est caractérisée en outre par une loi de cordes relatives C/R en fonction de Z/R montrée sur la figure 8, et une loi de vrillage $\beta$ en fonction de Z/R montrée sur la figure 9.

Le tableau ci-après donne les résultats d'essais en soufflerie d'une hélice HT3 conforme à l'invention et comportant douze pales.

Ce tableau, donne pour quatre nombres de Mach caractéristiques du vol de l'avion, pour un paramètre d'avancement ($\gamma$) et un coefficient de puissance ($\psi$) donnés, le rendement net d'une hélice HT3 conforme à l'invention.

Les résultats de l'hélice HT3 sont comparés aux résultats d'essais publiés d'hélices rapides américaines SR1 et SR3 comportant huit pales équipées de profils classiques NACA 16. Les résultats sont tirés des documents N.A.S.A. -CR 3047 et N.A.S.A.-CR 3505 pour les essais à haute vitesse des hélices SR1 et SR3 et d'un document A.I.A.A. 85-1259 pour les faibles vitesses de l'hélice SR3.

Le tableau fait apparaître que l'hélice conforme à l'invention présente l'avantage d'avoir des performances supérieures, non seulement, aux grands nombres de Mach de croisière, mais aussi aux faibles nombres de Mach, correspondant au décollage et à la phase de montée de l'avion.

| | | | Rendement net | | |
|---|---|---|---|---|---|
| | | | Hélice HT3 | Hélice SR1 | Hélice SR3 |
| M=0,25 | $\gamma$=1,24 | $\psi$=1,43 | 0,633 | 0,540 | 0,590 |
| M=0,5 | $\gamma$=2,3 | $\psi$=1,4 | 0,834 | 0,775 | 0,780 |
| M=0,7 | $\gamma$=3,12 | $\psi$=1,82 | 0,807 | 0,795 | 0,800 |
| M=0,75 | $\gamma$=3,12 | $\psi$=1,82 | 0,796 | 0,780 | 0,792 |

## Revendications

1. Hélice aérienne, notamment pour propulseur d'aéronef, caractérisée par le fait que la ligne moyenne (F) de chaque pale (1) étant le lieu géométrique des points de chaque profil situés au quart de corde compté à partir du bord d'attaque, est constituée par une courbe continue plane contenue dans un plan défini par les axes OZ–OY$_0$ ayant leur origine O sur l'axe de rotation de l'hélice, ledit plan OZ–OY$_0$ faisant avec le plan de rotation de l'hélice un angle $\emptyset_0$ dont le signe est tel que l'extrémité de chaque pale est recourbée vers l'aval par rapport au plan de rotation OZ–OY de l'hélice, et dont la valeur absolue est comprise entre 35° et 55° et de préférence entre 40° et 50°, ladite courbe présentant une première partie de coordonnées Y$_0$ négative et Z positive, et une seconde partie de coordonnées Y$_0$ positive et Z positive, le point de coordonnée Y$_0$ = O et Z ≠ O étant situé entre les valeurs de Z comprises entre 0,75 et 0,85 R (R désignant le rayon de l'hélice), la tangente à cette courbe a son extrémité correspondant à l'extrémité de la pale faisant avec l'axe OZ un angle $\Lambda$ compris entre 30° et 50° et de préférence entre 35° et 45°.

2. Hélice selon la revendication 1, caractérisée par le fait que la ligne moyenne (F) est définie par l'équation suivante, dans le plan $OZ-OY_0$:

$Y_0/R = M_0 + M_1 (Z/R) + M_2 (Z/R)^2 + M_3 (Z/R)^3 + M_4 (Z/R)^4$ dans laquelle

$0,05 < M_0 \le 0,015$; $0,1 < M_1 \le 0,2$; $-2 < M_2 \le -1$; $1,5 < M_3 \le 3$; $-1 < M_4 \le -0,5$.

3. Hélice selon la revendication 1 ou 2, dans laquelle les pales (1) émergent d'un capot (2), caractérisée par le fait que le susdit capot (2) est défini par une ligne méridienne présentant:

– à son origine, constituant le bord d'attaque du capot, une courbure maximum supérieure à 15,

– entre son origine et un premier point d'abscisse relative $X = x/D$ égal à 0,05, une courbure décroissant rapidement de la valeur maximum à environ une valeur de 7,

– entre ce premier point et un deuxième point situé à une distance du bord d'attaque comprise entre 0,5 et 0,7 fois la distance L bord d'attaque-plan des pales, une courbure décroissant sensiblement linéairement de la valeur de 7 à une valeur de 0,

– entre ce deuxième point et un troisième point situé dans le plan des pales, une courbure décroissant plus lentement que la susdite décroissance linéaire, de la valeur de 0 à une valeur minimum comprise entre –3 et –5,

– entre ce troisième point et un quatrième point situé dans le plan arrière du capot, une courbure croissant rapidement de la valeur minimum à une valeur de 0.

4. Hélice selon la revendication 3, dans laquelle un fuseau moteur (3) se raccorde au capot (2), caractérisée par le fait que le susdit fuseau moteur (3) présente une ligne méridienne prolongeant celle du capot (2) et dont la courbure croît de la valeur 0 à environ une valeur de 3 à une distance relative de 0,10 à 0,15 en aval du plan arrière du capot, puis décroît de la valeur de 3 à environ une valeur de 1 à une distance relative de 0,40 à 0,45 en aval du plan arrière du capot.

5. Hélice selon la revendication 3 ou 4, caractérisée par le fait que la ligne méridienne constituant le capot (2) est constituée par les tronçons de courbes suivants, dans le système cartésien X, Y dans lequel $X = x/D$ et $Y = r/D$

– pour $0 < X \le 0,3$

$Y = 0,3271995 \, X^{1/2} - 2,422616 \, X^2 + 5,697069 \, X^3$

– pour $0,3 \le X \le 0,55$

$Y = 2,996639 - 38,21174 \, X + 200,4801 \, X^2 - 538,7765 \, X^3 + 794,8556 \, X^4 - 615,5586 \, X^5 + 196,3246 \, X^6$.

6. Hélice selon la revendication 3 ou 4, caractérisée par le fait que ligne méridienne constituant le capot (2) est définie par les cotes suivantes:

| X | Y |
|---|---|
| 0. | 0. |
| .1250000E-01 | .3621461E-01 |
| .2500000E-01 | .5030967E-01 |
| .3750000E-01 | .6025554E-01 |
| .5000000E-01 | .6781963E-01 |
| .6250000E-01 | .7372742E-01 |
| .7500000E-01 | .7838351E-01 |
| .8750000E-01 | .8205535E-01 |
| .1000000E+00 | .8494048E-01 |
| .1125000E+00 | .8719646E-01 |
| .1250000E+00 | .8895621E-01 |
| .1375000E+00 | .9033639E-01 |
| .1500000E+00 | .9144257E-01 |
| .1625000E+00 | .9237234E-01 |
| .1750000E+00 | .9321749E-01 |
| .1875000E+00 | .9406537E-01 |
| .2000000E+00 | .9499998E-01 |
| .2125000E+00 | .9610265E-01 |
| .2250000E+00 | .9745259E-01 |
| .2375000E+00 | .9912732E-01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

7. Hélice selon l'une quelconque des revendications 1 à 6, caractérisée en ce qu'elle comporte les profils suivants:
- à 0,3 R, un profil d'épaisseur relative e/c = 13%,
- à 0,5 R, un profil d'épaisseur relative e/c = 9%,
- à 0,7 R, un profil d'épaisseur relative e/c = 6%,
- à 0,9 R, un profil d'épaisseur relative e/c = 3,5%,

le profil e/c = 13% étant raccordé progressivement vers l'embase jusqu'à l'intersection avec le capot où il épouse la forme de celui-ci.

**Patentansprüche**

1. Luftschraube, insbesondere für Flugzeugvortriebsmittel, dadurch gekennzeichnet, daß die Skelettlinie (F) jedes Luftschraubenblattes (1), welche dem geometrischen Ort aller Punkte eines jeden Profils entspricht, die in dem von der Vorderkante aus gezählten ersten Viertel der Sehne liegen, durch eine stetige ebene Kurve gebildet wird, die enthalten ist in einer Ebene, definiert durch die Achsen $OZ$–$OY_0$, die ihren Ursprung $O$ auf der Drehachse der Luftschraube haben, wobei diese Ebene $OZ$–$OY_0$ mit der Drehebene der Luftschraube einen Winkel $\emptyset_0$ bildet, dessen Vorzeichen dergestalt ist, daß das Ende jedes Blattes in bezug auf die Drehebene $OZ$–$OY$ der Luftschraube strömungsabwärts gekrümmt ist, und dessen Absolutbetrag zwischen 35° und 55°, vorzugsweise zwischen 40° und 50° liegt, wobei die besagte Kurve einen ersten Teil mit negativen $Y_0$-Koordinaten und positiven Z-Koordinaten und einen zweiten Teil mit positiven $Y_0$-Koordinaten und positiven Z-Koordinaten hat, daß der Punkt mit den Koordinaten $Y_0 = O$ und $Z/O$ zwischen den Z-Werten 0,75 und 0,85 R liegt (R bezeichnet den Radius der Luftschraube), und daß die Tangente an diese Kurve in deren Endpunkt, der dem Blattende entspricht, mit der Achse $OZ$ einen Winkel $\Lambda$ bildet, der zwischen 30° und 50° und vorzugsweise zwischen 35° und 45° beträgt.

2. Luftschraube nach Anspruch 1, dadurch gekennzeichnet, daß die Skelettlinie (F) in der Ebene $OZ$–$OY_0$ durch folgende Gleichung definiert ist:

$Y_0/R = M_0 + M_1 (Z/R) + M_2 (Z/R)^2 + M_3 (Z/R)^3 + M_4 (Z/R)^4$ wobei gilt

$0,05 < M_0 \le 0,015; 0,1 < M_1 \le 0,2; -2 < M_2 \le -1; 1,5 < M_3 \le 3; -1 < M_4 \le -0,5$.

3. Luftschraube nach Anspruch 1 oder 2, deren Blätter (1) an einer Nabe (2) befestigt sind, dadurch gekennzeichnet, daß diese Nabe (2) durch eine Meridianlinie mit folgenden Eigenschaften definiert ist:
- an ihrem Ursprung, welcher die Spitze der Nabe darstellt, hat sie eine Maximalkrümmung von mehr als 15,
- zwischen ihrem Ursprung und einem ersten Punkt auf der relativen Abszisse $X = x/D = 0,05$ hat sie eine Krümmung, die rasch von ihrem Maximalwert auf etwa einen Wert von 7 abnimmt,
- zwischen diesem ersten Punkt und einem zweiten Punkt der zu dem Vorderrand in einem Abstand liegt, der dem 0,5–0,7-fachen des Abstandes L Vorderrand-Blattebene entspricht, hat sie eine von dem Wert 7 auf einen Wert 0 deutlich linear abnehmende Krümmung,
- zwischen diesem zweiten Punkt und einem dritten in der Blattebene liegenden Punkt hat sie eine langsamer abnehmende Krümmung als die oben genannte linear abnehmende, und zwar von dem Wert 0 auf einen Minimalwert zwischen –3 und –5,
- zwischen diesem dritten Punkt und einem vierten, im hinteren Bereich der Nabe gelegenen Punkt hat sie eine rasch von dem Minimalwert auf einen Wert 0 zunehmende Krümmung.

4. Luftschraube nach Anspruch 3, bei der eine Motorgondel (3) mit der Nabe (2) verbunden ist, dadurch gekennzeichnet, daß diese Motorgondel (3) eine Meridianlinie aufweist, die die der Nabe (2) verlängert und deren Krümmung von dem Wert 0 auf etwa einen Wert 3 zunimmt in einem relativen Abstand von 0,10–0,15 strömungsabwärts vom hinteren Bereich der Nabe, und dann von dem Wert 3 auf etwa einen Wert von 1 abnimmt in einem relativen Abstand von 0,40–0,45 strömungsabwärts vom hinteren Bereich der Nabe.

5. Luftschraube nach Anspruch 3 oder 4, dadurch gekennzeichnet, daß die die Nabe (2) bildende Meridianlinie der Nabe (2) durch folgende Kurventeilabschnitte im kartesischen Koordinatensystem X, Y mit $X = x/D$ und $Y = r/D$ gebildet wird
- für $0 < X \le 0,3$
$Y = 0,3271995 X^{1/2} - 2,422616 X^2 + 5,697069 X^3$
- für $0,3 \le X \le 0,55$
$Y = 2,996639 - 38,21174 X + 200,4801 X^2 - 538,7765 X^3 + 794,8556 X^4 - 615,5586 X^5 + 196,3246 X^6$.

6. Luftschraube nach Anspruch 3 oder 4, dadurch gekennzeichnet, daß die die Nabe (2) bildende Meridianlinie durch folgende Koordinaten definiert ist:

| X | Y |
|---|---|
| 0. | 0. |
| .1250000E–01 | .3621461E–01 |
| .2500000E–01 | .5030967E–01 |
| .3750000E–01 | .6025554E–01 |
| .5000000E–01 | .6781963E–01 |
| .6250000E–01 | .7372742E–01 |
| .7500000E–01 | .7838351E–01 |
| .8750000E–01 | .8205535E–01 |
| .1000000E+00 | .8494048E–01 |
| .1125000E+00 | .8719646E–01 |
| .1250000E+00 | .8895621E–01 |
| .1375000E+00 | .9033639E–01 |
| .1500000E+00 | .9144257E–01 |
| .1625000E+00 | .9237234E–01 |
| .1750000E+00 | .9321749E–01 |
| .1875000E+00 | .9406537E–01 |
| .2000000E+00 | .9499998E–01 |
| .2125000E+00 | .9610265E–01 |
| .2250000E+00 | .9745259E–01 |
| .2375000E+00 | .9912732E–01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

7. Luftschraube nach einem der Ansprüche 1–6, dadurch gekennzeichnet, daß sie folgende Profile umfaßt:
– bei 0,3 R, ein Profil von einer relativen Dicke von e/c = 13%,
– bei 0,5 R, ein Profil von einer relativen Dicke von e/c = 9%,
– bei 0,7 R, ein Profil von einer relativen Dicke von e/c = 6%,
– bei 0,9 R, ein Profil von einer relativen Dicke von e/c = 3,5%,
wobei das Profil e/c = 13% nach und nach mit dem Sockel verbunden wird bis zur Verschneidung mit der Nabe, wo es deren Form annimmt.

**Claims**

1. Propeller, in particular for an aircraft propulsion unit, characterized in that the median line (F) of each blade (1) being the geometric locus of the points of each profile which are situated at the cord quarter counted from the leading edge, consists of a plane continuous curve contained in a plane defined by the axes $OZ–OY_0$ having their origin O on the axis of rotation of the propeller, the said plane $OZ–OY_0$ forming with the plane of rotation of the propeller an angle $\emptyset_0$ the sign of which is such that the end of each blade is curved back in a downstream direction in relation to the plane of rotation OZ–OY of the propeller, and the absolute value of which is within the range between 35° and 55° and preferably between 40° and 50°, the said curve exhibiting a first part of negative coordinate $Y_0$ and positive coordinate Z, and a second part of positive coordinate $Y_0$ and positive coordinate Z, the point of coordinate $Y_0 = 0$ and $Z \neq 0$ being situated between the values of Z within the range between 0.75 and 0.85 R (R designating the radius of the propeller), the tangent to this curve has (sic) its end corresponding to the end of the blade forming with the axis OZ an angle $\Lambda$ within the range between 30° and 50° and preferably between 35° and 45°.

2. Propeller according to claim 1, characterized in that the median line (F) is defined by the following equation, in the plane $OZ–OY_0$:
$Y_0/R = M_0 + M_1 (Z/R) + M_2 (Z/R)^2 + M_3 (Z/R)^3 + M_4 (Z/R)^4$ in which
$0.05 < M_0 \leq 0.015; 0.1 < M_1 \leq 0.2; -2 < M_2 \leq -1;$
$1.5 \; M_3 \leq 3; -1 < M_4 \leq -0.5.$

3. Propeller according to claim 1 or 2, in which the blades (1) emerge from a spinner (2), characterized in that the said spinner (2) is defined by a meridian line exhibiting:
– at its origin, constituting the leading edge of the spinner, a maximum curvature greater than 15,
– between its origin and a first point of relative abscissa X = x/D equal to 0.05, a curvature decreasing rapidly from the maximum value to approximately a value of 7,
– between this first point and a second point situated at a distance from the leading edge within the range between 0.5 and 0.7 times the distance L from the leading edge to the plane of the blades, a curvature decreasing substantially linearly from the value of 7 to a value of 0,
– between this second point and a third point situated in the plane of the blades, a curvature decreasing more slowly than the said linear decrease, from the value of 0 to a minimum value within the range between –3 and –5,
– between this third point and a fourth point situated in the rear plane of the spinner, a curvature increasing rapidly from the minimum value to a value of 0.

4. Propeller according to claim 3, in which a drive spindle (3) is connected to the spinner (2), characterized in that the said drive spindle (3) exhibits a meridian line extending that of the spinner (2) and the curvature of which increases from the value 0 to approximately a value of 3 at a relative distance of 0.10 to 0.15 downstream of the rear plane of the spinner, and then decreases from the value of 3 to approximately a value of 1 at a relative distance of 0.40 to 0.45 downstream of the rear plane of the spinner.

5. Propeller according to claim 3 or 4, characterized in that the meridian line constituting the spinner (2) is formed by the following sections of curves, in the X, Y Cartesian system in which X = x/D and Y = r/D
– for $0 < X \leq 0.3$
$Y = 0.3271995 \, X^{1/2} - 2.422616 \, X^2 + 5.697069 \, X^3$
– for $0.3 \leq X \leq 0.55$
$Y = 2.996639 - 38.21174 \, X + 200.4801 \, X^2 - 538.7765 \, X^3 + 794.8556 \, X^4 - 615.5586 \, X^5 + 196.3246 \, X^6.$

6. Propeller according to claim 3 or 4, characterized in that meridian line constituting the spinner (2) is defined by the following dimensions:

| X | Y |
|---|---|
| 0. | 0. |
| .1250000E–01 | .3621461E–01 |
| .2500000E–01 | .5030967E–01 |
| .3750000E–01 | .6025554E–01 |
| .5000000E–01 | .6781963E–01 |
| .6250000E–01 | .7372742E–01 |
| .7500000E–01 | .7838351E–01 |
| .8750000E–01 | .8205535E–01 |
| .1000000E+00 | .8494048E–01 |
| .1125000E+00 | .8719646E–01 |
| .1250000E+00 | .8895621E–01 |
| .1375000E+00 | .9033639E–01 |
| .1500000E+00 | .9144257E–01 |
| .1625000E+00 | .9237234E–01 |
| .1750000E+00 | .9321749E–01 |
| .1875000E+00 | .9406537E–01 |
| .2000000E+00 | .9499998E–01 |
| .2125000E+00 | .9610265E–01 |
| .2250000E+00 | .9745259E–01 |
| .2375000E+00 | .9912732E–01 |
| .2500000E+00 | .1012030E+00 |
| .2625000E+00 | .1037544E+00 |
| .2750000E+00 | .1068558E+00 |
| .2875000E+00 | .1105801E+00 |
| .3000000E+00 | .1150000E+00 |
| .3104167E+00 | .1192282E+00 |
| .3208333E+00 | .1237836E+00 |
| .3312500E+00 | .1284998E+00 |
| .3416667E+00 | .1332382E+00 |
| .3520833E+00 | .1378875E+00 |
| .3625000E+00 | .1423614E+00 |
| .3729167E+00 | .1465950E+00 |
| .3833333E+00 | .1505422E+00 |
| .3937500E+00 | .1541728E+00 |
| .4041667E+00 | .1574703E+00 |
| .4145833E+00 | .1604294E+00 |
| .4250000E+00 | .1630536E+00 |
| .4354167E+00 | .1653538E+00 |
| .4458333E+00 | .1673461E+00 |
| .4562500E+00 | .1690503E+00 |
| .4666667E+00 | .1704886E+00 |
| .4770833E+00 | .1716840E+00 |
| .4875000E+00 | .1726598E+00 |
| .4979167E+00 | .1734383E+00 |
| .5083333E+00 | .1740401E+00 |
| .5187500E+00 | .1744838E+00 |
| .5291667E+00 | .1747857E+00 |
| .5395833E+00 | .1749592E+00 |
| .5500000E+00 | .1750155E+00 |

7. Propeller according to any one of claims 1 to 6, characterized in that it comprises the following profiles:
– at 0.3 R, a profile of relative thickness e/c = 13%,
– at 0.5 R, a profile of relative thickness e/c = 9%,
– at 0.7 R, a profile of relative thickness e/c = 6%,
– at 0.9 R, a profile of relative thickness e/c = 3.5%,
the profile e/c = 13% being levelled of progressively towards the base as far as the intersection with the spinner, where it espouses the form of the latter.

FIG.1.

FIG.5.

FIG.2.

FIG.3.

EP 0 265 335 B1

FIG.4 .

FIG.6.

FIG.7.

# FIG.8.

FIG.9.